Europäisches Patentamt

(19) European Patent Office

Office européen des brevets

(11) Numéro de publication: **0 198 747**
**A1**

## (12) DEMANDE DE BREVET EUROPEEN

(21) Numéro de dépôt: **86400627.5**

(22) Date de dépôt: **25.03.86**

(51) Int. Cl.⁴: **F 16 D 13/71**

(30) Priorité: **28.03.85 FR 8504643**

(43) Date de publication de la demande: **22.10.86**
**Bulletin 86/43**

(84) Etats contractants désignés: **DE IT**

(71) Demandeur: **VALEO, 64 Avenue de la Grande Armée,**
**F-75017 Paris (FR)**

(72) Inventeur: **Despres, Dominique, 24 Rue du Général**
**Roguet, F-92110 Clichy (FR)**

(74) Mandataire: **CABINET BONNET-THIRION, 95 Boulevard**
**Beaumarchais, F-75003 Paris (FR)**

(54) **Procédé pour la réalisation d'un mécanisme d'embrayage et mécanisme d'embrayage correspondant.**

㊾ Il s'agit d'un mécanisme d'embrayage (10) dont le couvercle (11) présente, entre deux logements (23I, 23II) propres chacun à recevoir un jonc d'appui (22) selon le diamètre du diaphragme (14) à mettre en œuvre, au moins une saillie (27).

Suivant l'invention, et préalablement à l'assemblage de l'ensemble, cette saillie (27) est au moins partiellement arasée par usinage, lorsque le diaphragme (13) à mettre en œuvre est un diaphragme de grand diamètre.

Application notamment aux véhicules automobiles.

# 0198747

"Procédé pour la réalisation d'un mécanisme d'embrayage
et mécanisme d'embrayage correspondant"

La présente invention concerne d'une manière générale les mécanismes d'embrayage, notamment pour véhicules automobiles.

Ainsi qu'on le sait, un tel mécanisme d'embrayage comporte une première pièce globalement annulaire, communément dite couvercle, une deuxième pièce globalement annulaire, communément dite plateau de pression, liée en rotation à la première par des moyens d'attelage lui autorisant un déplacement axial par rapport à celle-ci, et, entre lesdites pièces annulaires, un diaphragme, qui, prenant axialement appui sur l'une et l'autre desdites pièces annulaires, sollicite la deuxième, en l'espèce le plateau de pression, en direction opposée à la première, en l'espèce le couvercle.

En pratique, pour l'appui du diaphragme, qui est lui-même constitué d'une pièce globalement annulaire à partie périphérique formant rondelle Belleville et partie centrale fragmentée en doigts radiaux formant leviers de débrayage, le couvercle présente, usuellement, annulairement, soit un logement propre à la mise en place d'un jonc d'appui apte à un tel appui, soit un bourrelet en saillie, une déformation en demi-onde par exemple, propre à former par lui-même un tel jonc d'appui.

Le plus souvent, seul un tel logement ou un tel bourrelet est ainsi prévu sur le couvercle, ce logement ou ce bourrelet étant établi suivant une circonférence de diamètre déterminé correspondant à celui du diaphragme à mettre en oeuvre pour satisfaire aux caractéristiques, et notamment aux caractéristiques de charge, à respecter pour l'embrayage concerné.

Pour une minimisation du nombre de pièces différentes à prévoir pour la réalisation d'embrayages, et donc de mécanismes d'embrayage, de caractéristiques différentes, il a cependant été proposé, dans la demande de brevet français déposée le 5 Juin 1981 sous le No 81 11140 et publiée sous le No 2.507.268, de prévoir, annulairement, sur le couvercle d'un tel mécanisme, deux logements, qui, établis suivant des circonférences de diamètres différents, sont chacun propres à la mise en place d'un jonc pour un diaphragme.

Une telle disposition permet effectivement, avantageusement, de mettre en oeuvre, suivant les caractéristiques à respecter, soit un diaphragme de relativement grand diamètre, soit un diaphragme de plus petit diamètre, et donc de réaliser économiquement, à la demande, avec, pour le reste, dans l'un et l'autre cas, les mêmes pièces, soit des mécanismes d'embrayage à diaphragme de grand diamètre, soit des mécanismes d'embrayage à diaphragme de petit diamètre, de caractéristiques différentes.

Bien que donnant donc satisfaction, du fait de la standardisation ainsi obtenue pour des couvercles destinés à la réalisation de mécanismes d'embrayage de caractéristiques différentes, une telle disposition s'avère à l'expérience conduire parfois, pour certains mécanismes d'embrayage à diaphragme de grand diamètre, à une difficulté due à la présence, en pratique, à l'état brut, entre les deux logements prévus sur le couvercle pour un jonc d'appui, d'une saillie, dite ci-après par simple commodité saillie secondaire, bordant, le long de sa périphérie radialement la plus externe, celui de ces logements qui est radialement le plus interne.

Cette saillie secondaire, qui, en pratique, vient d'un seul tenant avec le couvercle lors même du formage à la presse de celui-ci, des poinçons étant spécifiquement prévus à cet effet sur l'outil de presse correspondant, est nécessaire, pour les mécanismes d'embrayage à diaphragme de petit diamètre, pour assurer le centrage du jonc d'appui correspondant par la périphérie radialement la plus externe de celui-ci, ou au moins participer à un tel centrage.

Mais, pour certaines valeur de la charge sur le plateau de pression, et compte tenu des inévitables tolérances de fabrication, il peut arriver, pour les mécanismes d'embrayage à diaphragme de grand diamètre, que, en service, cette saillie secondaire vienne interférer avec le diaphragme lors du basculement de celui-ci, ledit diaphragme venant alors intempestivement buter contre elle.

Pour pallier cet inconvénient, on peut songer, dans un tel cas, lorsque le couvercle est en tôle emboutie, à "mettre en condition", au préalable, l'outil de presse concerné, c'est-à-dire à retirer au préalable de cet outil de presse les poinçons correspondant à la formation de la saillie secondaire en question.

Mais si cette solution a l'avantage d'éviter par là une usure non nécessaire de ces poinçons, qui ne servent alors à rien, elle a pour inconvénient d'imposer de manière dispendieuse des réglages relativement délicats et longs à exécuter.

Le surcoût qui en résulte, acceptable lorsque que les cadences de fabrication des mécanismes à diaphragme de grand diamètre et de petit diamètre sont effectivement importantes, devient excessif lorsque que ces cadences de fabrication sont faibles.

La présente invention a d'une manière générale pour objet une disposition permettant avantageusement de conserver dans tous les cas le même outil de presse.

De manière plus précise, elle a tout d'abord pour objet un procédé pour la réalisation d'un mécanisme d'embrayage, notamment pour véhicule automobile, du genre comportant une première pièce globalement annulaire, dite couvercle, une deuxième pièce globalement annulaire, dite plateau de pression, liée en rotation à la première par des moyens d'attelage lui autorisant un déplacement axial par rapport à celle-ci, et, entre lesdites pièces annulaires, un diaphragme prenant axialement appui sur l'une et l'autre de celles-ci pour sollicitation de la deuxième en direction opposée à la première, ce procédé étant d'une manière générale caractérisé en ce que, partant d'un couvercle présentant, annulairement, à l'état brut, entre deux logements, qui, établis suivant des circonférences de diamètres différents, sont chacun propres à la mise en place d'un jonc pour un diaphragme, au moins une saillie bordant celui de ces logements qui est radialement le plus interne, et s'agissant de la réalisation d'un mécanisme dans lequel c'est au contraire celui desdits logements qui est radialement le plus externe qui doit être utilisé pour le jonc d'appui du diaphragme, on procède, préalablement à l'assemblage de l'ensemble, à l'élimination, au moins partielle, par usinage, de ladite saillie ; elle a encore pour objet un mécanisme d'embrayage ainsi traité.

Ainsi, suivant l'invention, le couvercle destiné à un mécanisme d'embrayage à diaphragme de grand diamètre est usiné en deux étapes, une première étape, classique, à l'issue de laquelle il présente, à l'état brut, une saillie secondaire, puis, suivant l'invention, une deuxième étape, au cours de laquelle cette saillie est plus ou moins arasée.

La solution de l'invention permet donc de satisfaire de manière très simple, et suivant un bon compromis, d'une part à la recherche, souhaitée, d'une standardisation optimale pour le couvercle, la particularisation à appliquer à celui-ci pour les mécanismes d'embrayage à diaphragme de grand diamètre n'intervenant qu'après la fabrication normale de celui-ci, et, d'autre part, à la conservation, également souhaitée, sur l'outil de presse correspondant, de l'ensemble des poinçons équipant un tel outil de presse, que le couvercle traité par cet outil de presse soit destiné à un mécanisme d'embrayage à diaphragme de grand diamètre ou qu'il soit destiné à un mécanisme d'embrayage à diaphragme de petit diamètre.

En outre, aucune "mise en condition" n'étant ainsi nécessaire pour cet outil de presse, l'usure dont sont inévitablement l'objet les poinçons qui l'équipent se développe avantageusement de manière uniforme pour l'ensemble de ces poinçons.

Les caractéristiques et avantages de l'invention ressortiront d'ailleurs de la description qui va suivre, à titre d'exemple, en référence aux dessins schématiques annexés sur lesquels :

la figure 1 est une vue en coupe axiale d'un mécanisme d'embrayage réalisé suivant l'invention ;

la figure 2 en est une vue partielle en élévation, suivant la flèche II de la figure 1 ;

la figure 3 est, à échelle supérieure, une vue partielle en coupe axiale, suivant la ligne brisée III-III de la figure 2, du seul couvercle mis en oeuvre dans ce mécanisme d'embrayage, représenté isolément ;

la figure 4 en est une vue partielle en élévation de ce couvercle, vu de l'intérieur, suivant la flèche IV de la figure 3 ;

la figure 5 en est une autre vue partielle en coupe axiale, suivant la ligne V-V de la figure 2 ;

la figure 6 reprend, à échelle supérieure, le détail de la figure 3 repéré par un encart VI sur celle-ci ;

la figure 7 est une vue en coupe axiale analogue à celle de la figure 3, pour une variante de mise en oeuvre de l'invention ;

la figure 8 est également une coupe axiale analogue à celle de la figure 3, et illustre l'état brut, initial, du couvercle mis en oeuvre dans le mécanisme d'embrayage suivant l'ivention.

Tel qu'illustré sur ces figures, et de manière connue en soi, le mécanisme d'embrayage 10 auquel est susceptible d'être appliquée l'invention comporte, globalement, une première pièce globalement annulaire 11, dite couvercle, une deuxième pièce globalement annulaire 12, dite plateau de pression, qui est liée en rotation à la première par des moyens d'attelage lui autorisant un déplacement axial par rapport à celle-ci, et, entre lesdites pièces annulaires 11, 12, un diaphragme 13, qui, constituant lui aussi une pièce globalement annulaire, à partie périphérique 14 formant rondelle Belleville et partie centrale 15 fragmentée par des fentes en doigts radiaux formant leviers de débrayage, prend axialement

0198747

6

appui sur l'une et l'autre desdites pièces annulaires 11, 12, pour sollicitation de la deuxième, en l'espèce le plateau de pression 12, en direction opposée à la première, en l'espèce le couvercle 11.

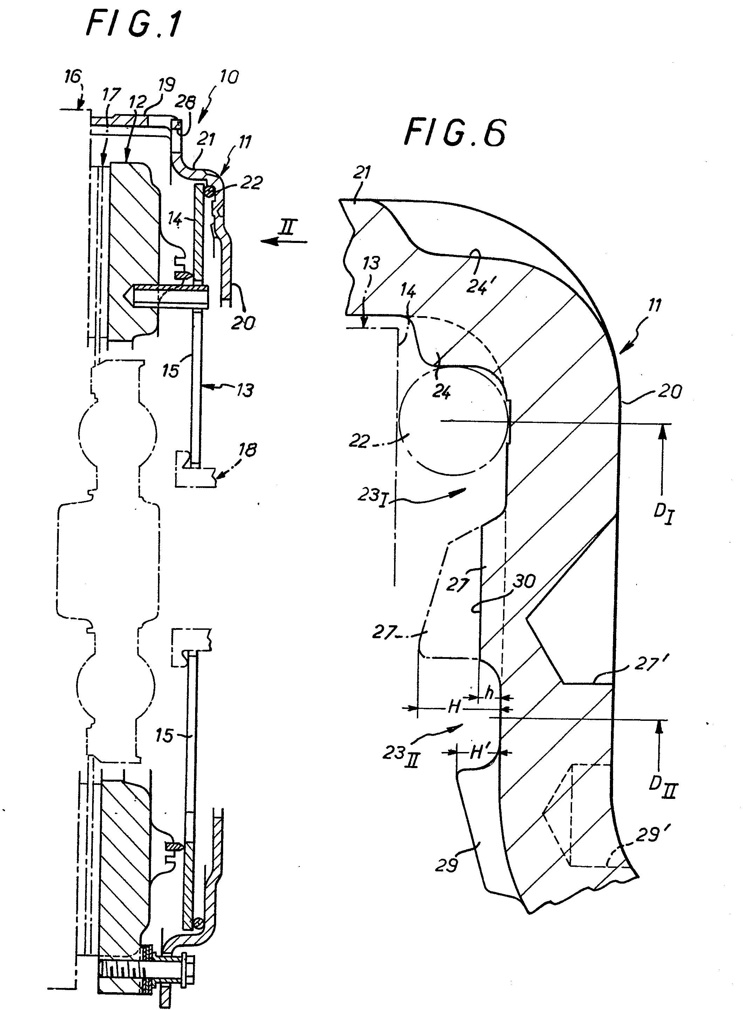

Tel que schématisé en traits interrompus à la figure 1, ce mécanisme d'embrayage 10 forme par lui-même une entité propre à être rapportée, en tant que telle, par le couvercle 11, sur un plateau de réaction 16, pour serrage d'un disque de friction 17 entre celui-ci et le plateau de pression 12.

Sous l'action d'une butée de débrayage 18 agissant en traction sur l'extrémité des doigts radiaux que forme la partie centrale 15 du diaphragme 13, l'action de serrage ainsi normalement exercée en permanence sur le plateau de pression 12, et donc sur le disque de friction 17, par la partie périphérique formant rondelle Belleville 14 dudit diaphragme 13 peut être relâchée.

Ces dispositions sont bien connues par elles-mêmes, et ne faisant pas en soi l'objet de la présente invention elles ne seront pas décrites plus en détail ici.

Seuls seront décrit ici les éléments du mécanisme d'embrayage 10 nécessaires à la compréhension de l'invention.

De manière également connue en soi, le couvercle 11, qui a globalement la configuration d'une cuvette à fond ajouré, avec, de place en place, le long de son bord, des rehausses axiales 19 propres à en déterminer la position axiale par rapport au plateau de réaction 16, et qui, dans la forme de réalisation représentée, est, en pratique, en tôle emboutie, présente, globalement perpendiculairement à l'axe de l'ensemble, pour l'appui axial du diaphragme 13, une paroi transversale 20, et, globalement parallèlement audit axe, une paroi latérale périphérique 21.

S'agissant, comme en l'espèce, d'un mécanisme d'embrayage du type dit "tiré", c'est-à-dire d'un mécanisme d'embrayage sur le diaphragme 13 duquel la butée de débrayage 18 doit agir en traction, comme indiqué ci-dessus, l'appui axial du diaphragme 13 sur le couvercle 11, et, plus précisément, l'appui axial de la partie périphérique formant rondelle Belleville 14 de ce diaphragme 13 sur la paroi transversale 20 de ce couvercle 11, se fait par la zone de plus grand diamètre de ladite partie périphérique 14 du diaphragme 13.

Quoi qu'il en soit, cet appui axial se fait en pratique par l'intermédiaire d'un jonc 22.

Suivant des dispositions qui, faisant l'objet de la demande de brevet français No 81 11140 mentionnée ci-dessus, sont décrites en détail dans celle-ci et ne seront donc pas redécrites à nouveau en détail ici, le couvercle 11, et, plus précisément, la paroi transversale 20 de celui-ci présente, annulairement, deux logements 23I, 23II, qui, établis suivant des circonférences de diamètres différents DI, DII, sont chacun propres à la mise en place d'un jonc 22, de diamètre approprié, pour le diaphragme 13.

Cette disposition permet de mettre en oeuvre, suivant les réalisations recherchées, soit un diaphragme 13 de grand diamètre, soit un diaphragme 13 de petit diamètre, le diamètre du jonc 22 correspondant étant choisi en conséquence.

Dans la réalisation représentée, c'est un diaphragme 13 de grand diamètre qui est ainsi mis en oeuvre, le jonc 22 correspondant étant implanté dans celui, 23I, des logements précédents qui est radialement le plus externe.

En pratique, pour le centrage d'un jonc 22 dans ce logement 23I, ce logement 23I se trouve bordé, le long de sa périphérie radialement la plus externe, par au moins une saillie 24, et, en fait, par une pluralité de telles saillies 24 convenablement réparties circulairement.

Dans la forme de réalisation représentée, ces saillies 24 affectent de place en place, l'angle interne du couvercle 11 suivant lequel la paroi transversale 20 de celui-ci se raccorde à sa paroi latérale 21.

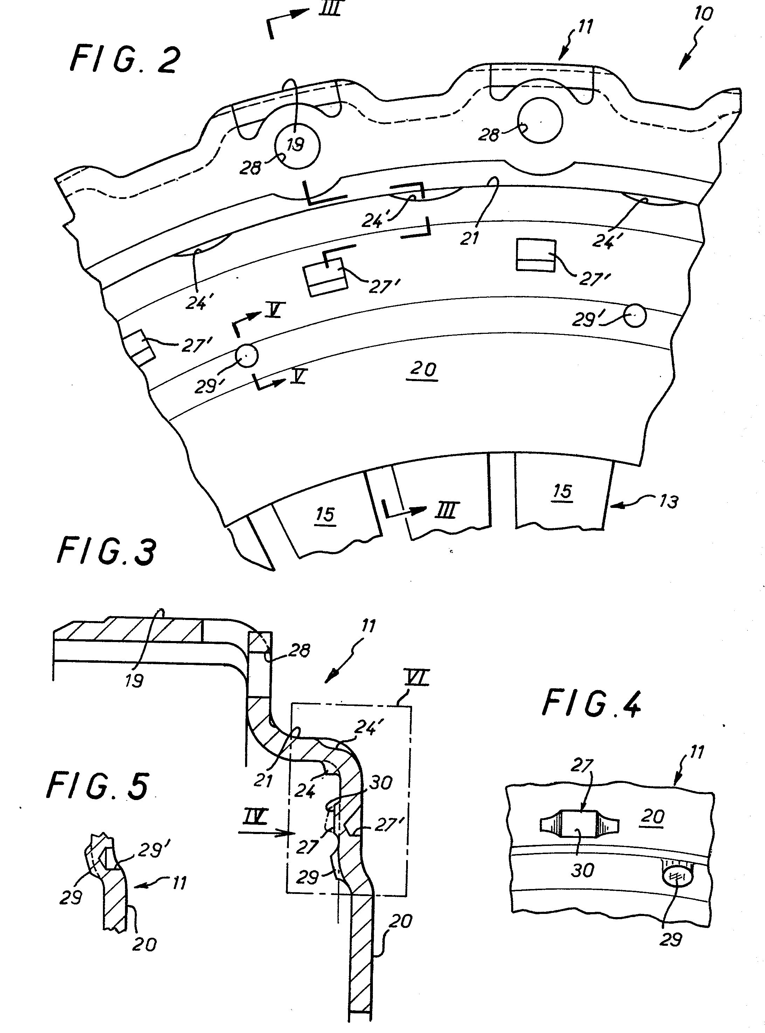

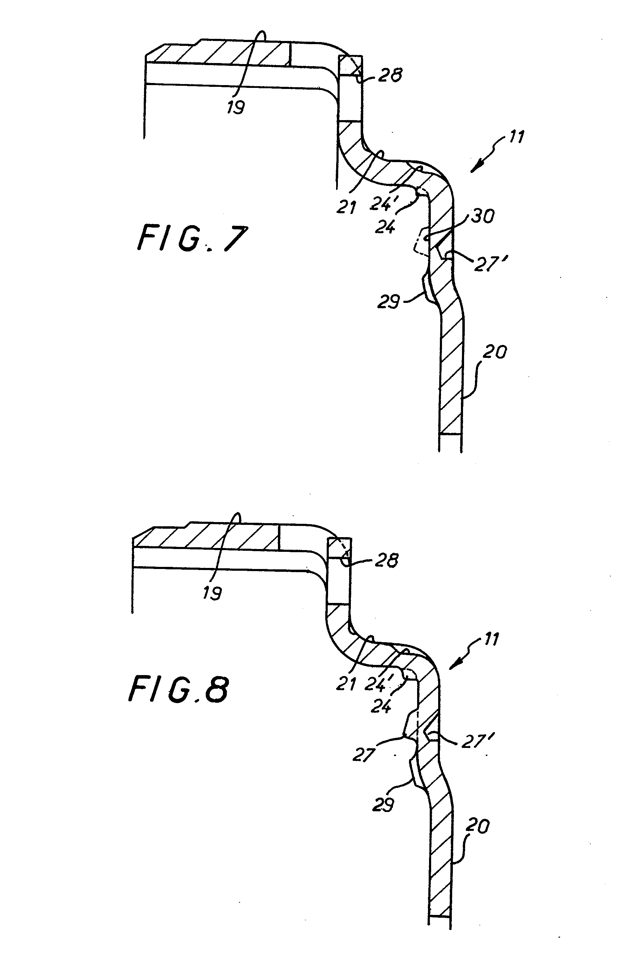

De même, à l'état brut, tel que schématisé en traits interrompus sur les figures 3 et 6, et tel que représenté en trait plein à la figure 8, le couvercle 10 présente, annulairement, entre les deux logements 23I, 23II, au moins une saillie 27, qui, bordant celui, 23II, de ces logements qui est radialement le plus interne, le long de la périphérie radialement la plus externe de celui-ci, est destinée à assurer le centrage d'un jonc lorsqu'un tel jonc est implanté dans un tel logement 23II.

Comme précédemment, plusieurs saillies 27, convenablement réparties circulairement, sont ainsi prévues sur la face interne de la paroi transversale 20 du couvercle 11.

En pratique, dans la forme de réalisation représentée, ces saillies 27 sont circulairement décalées par rapport aux saillies 24 précédentes, en alternant circulairement avec celles-ci.

En plan, figure 4, elles ont un contour globalement rectangulaire.

Transversalement, figures 3 et 6, leur profil est globalement celui d'un triangle accolé à un trapèze droit par la petite base de celui-ci, avec un côté de ce triangle en continuité avec le côté droit de ce trapèze.

A l'état brut, la hauteur H d'une telle saillie 27 par rapport aux fonds des logements 23I, 23II, qui sont en pratique coplanaires, est relativement importante.

Bien qu'inférieure à l'épaisseur axiale d'un jonc 22, elle est supérieure à sa demi-épaisseur axiale.

De préférence, et tel que représenté, pour une bonne répartition mécanique de l'ensemble, les saillies 24 sont circonférentiellement disposées à l'écart des perçages 28 que présente le rebord radial du couvercle 11 pour sa fixation par des vis au plateau de réaction 16, chacune entre deux de ces perçages 28, et, corollairement, les saillies 27 sont chacune établies radialement au droit d'un tel perçage 28.

Dans la forme de réalisation représentée, celui, 23II, des logements prévus pour un jonc d'appui qui est radialement le plus interne est encore bordé, le long de sa périphérie radialement la plus interne, par au moins une saillie 29, propre à assurer une retenue convenable d'un tel jonc lorsqu'il s'agit d'un jonc de forme ouverte.

En pratique, une pluralité de saillies 29 sont ainsi prévues sur la face interne de la paroi transversale 20 du couvercle 11, à raison d'une saillie 29 pour deux saillies 24, et chacune en correspondance angulaire avec une telle saillie 24.

Dans la forme de réalisation représentée, les saillies 29 ont, en plan, un contour oval, et, en profil, un contour globalement rectangulaire ou trapézoïdal.

Leur hauteur H' est largement inférieure à la hauteur H des saillies 27.

En pratique elle est inférieure à la demi-épaisseur axiale d'un jonc d'appui 22.

Les saillies 24, 27 et 29 que présente ainsi sur sa face interne le couvercle 11 sont toutes formées en pratique par des bossages d'un seul tenant avec celui-ci, ces bossages résultant d'une opération d'emboutissage pratiquée à l'aide de poinçons lors même de la réalisation à la presse d'un tel couvercle 11.

Sur la vue en élévation de la figure 2, on voit en creux, en correspondance avec les saillies 24, 27, 29, les cuvettes d'emboutissage 24', 27', 29'ménagées dans le couvercle 11 par ces poinçons.

Suivant l'invention, lorsque, comme en l'espèce, c'est un diaphragme 13 de grand diamètre qui est mis en oeuvre, on procède, préalablement à l'assemblage de l'ensemble, c'est-à-dire préalablement à l'assemblage des divers constituants du mécanisme d'embrayage 10, à l'élimination, au moins partielle, par usinage, des saillies 27.

Cette élimination peut n'être que partielle, tel que représenté sur les figures 1 à 6.

Seule subsiste alors une hauteur h de ces saillies 27.

En variante, figure 7, elles peuvent être totalement éliminées.

Quoi qu'il en soit, le couvercle 11 du mécanisme d'embrayage 10 ainsi traité présente, dès lors, annulairement, en bordure du logement 23II concerné, le long de la périphérie radialement la plus externe de celui-ci, une surface usinée 30, qui est comme la cicatrice de l'opération d'arasage effectuée.

Dans le cas où, comme représenté sur les figures 1 à 6, cet arasage n'est que partiel, cette surface usinée 30 forme la surface de crête de la partie subsistante des saillies 27 ainsi partiellement arasées.

En pratique, l'arasage par usinage des saillies 27 est fait suffisant pour que, en service, le diaphragme 13 ne vienne pas, lors d'un débrayage, porter sur de telles saillies 27, ce qui en limiterait de manière intempestive le mouvement de basculement correspondant.

Si nécessaire, les saillies 29, c'est-à-dire celles qui bordent le logement 23II le long de la périphérie radialement la plus interne de celui-ci, peuvent également, dans le même but, être au moins partiellement éliminées par usinage.

Bien entendu, la présente invention ne se limite pas aux formes de mise en oeuvre décrites et représentées, mais englobe toute variante d'exécution.

# 0198747

11

## REVENDICATIONS

1. Procédé pour la réalisation d'un mécanisme d'embrayage, notamment pour véhicule automobile, du genre comportant une première pièce globalement annulaire (11), dite couvercle, une deuxième pièce globalement annulaire (12), dite plateau de pression, liée en rotation à la première par des moyens d'attelage lui autorisant un déplacement axial par rapport à celle-ci, et, entre lesdites pièces annulaires (11, 12), un diaphragme (13) prenant axialement appui sur l'une et l'autre de celles-ci pour sollicitation de la deuxième en direction opposée à la première, caractérisé en ce que, partant d'un couvercle (11) présentant, annulairement, à l'état brut, entre deux logements (23I, 23II), qui, établis suivant des circonférences de diamètres différents (DI, DII), sont chacun propres à la mise en place d'un jonc (22) pour un diaphragme, au moins une saillie (27, 29) bordant celui (23II) de ces logements qui est radialement le plus interne, et s'agissant de la réalisation d'un mécanisme dans lequel c'est au contraire celui (23I) desdits logements qui est radialement le plus externe qui doit être utilisé pour le jonc d'appui (22) du diaphragme (13), on procède, préalablement à l'assemblage de l'ensemble, à l'élimination au moins partielle, par usinage, de ladite saillie (27, 29).

2. Procédé suivant la revendication 1, caractérisé en ce que on procède, préalablement à l'assemblage de l'ensemble, à l'élimination totale par usinage, de la saillie (27, 29) concernée.

3. Procédé suivant l'une quelconque des revendications 1, 2, caractérisé en ce que la saillie (27) concernée borde le logement radialement le plus interne (23II) le long de la périphérie radialement la plus externe de celui-ci.

4. Procédé suivant l'une quelconque des revendications 1, 2, caractérisé en ce que la saillie (29) concernée borde le logement radialement le plus interne (23II) le long de la périphérie radialement la plus interne de celui-ci.

5. Mécanisme d'embrayage, notamment pour véhicule automobile, du genre comportant une première pièce globalement annulaire (11), dite couvercle, une deuxième pièce globalement annulaire (12), dite plateau de pression, liée en rotation à la première par des moyens d'attelage lui autorisant un déplacement axial par rapport à celle-ci, et, entre lesdites pièces annulaires, un diaphragme (13) prenant axialement appui sur l'une et l'autre de celles-ci pour sollicitation de la deuxième en direction opposée à la première avec, annulairement, sur le couvercle (11), deux logements (23I, 23II), qui, établis suivant des circonférences de diamètres différents (DI, DII), sont chacun propres à la mise en place d'un jonc (22) pour un diaphragme, caractérisé par la présence, annulairement, d'une surface usinée (30) en bordure de celui (23II) desdits logements qui est radialement le plus interne, le long de l'une au moins des périphéries de celui-ci.

6. Mécanisme d'embrayage suivant la revendication 5, caractérisé en ce que ladite surface usinée (30) forme la surface de crête d'une saillie (27, 29) partiellement arasée.

7. Mécanisme d'embrayage suivant la revendication 6, caractérisé en ce que le logement (23I) radialement externe se trouve bordé, le long de sa périphérie radialement la plus externe, par une pluralité de saillies (24) convenablement réparties circulairement, et, le couvercle (11) présentant un rebord radial présentant lui-même des perçages (28), lesdites saillies (24) sont circonférentiellement disposées à l'écart desdits perçages (28).

8. Mécanisme d'embrayage suivant la revendication 7, caractérisé en ce que plusieurs saillies (27), convenablement réparties circulairement, étant prévues le long de la périphérie radialement la plus externe du logement (23II) radialement le plus interne, ces saillies (27) sont circulairement décalées par rapport aux saillies (24), en alternant avec celles-ci.

9. Mécanisme d'embrayage suivant la revendication 8, caractérisé en ce que les saillies (27) sont chacune établies radialement au droit d'un perçage (28).

10. Mécanisme d'embrayage suivant l'une quelconque des revendications 7 à 9, caractérisé en ce que le logement (23II) radialement le plus interne est bordé, le long de sa périphérie radialement la plus externe, par une pluralité de saillies (29), à raison d'une saillie (29) pour deux saillies (24), et chacune en correspondance angulaire avec une telle saillie (24).

11. Mécanisme d'embrayage suivant l'une quelconque des revendications 6 à 10, caractérisé en ce que les saillies (24, 27, 29) que présente sur sa face interne le couvercle (11) sont toutes formées par des bossages qui sont d'un seul tenant avec celui-ci et résultent d'une opération d'emboutissage.

**FIG.1**

**FIG.6**

FIG. 2

FIG.3

FIG.5

FIG.4

0198747

3/3

FIG.7

FIG.8

**Office européen
des brevets**

# RAPPORT DE RECHERCHE EUROPEENNE

EP 86 40 0627

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| | Néant | | F 16 D 13/71 |
| | ----- | | |

DOMAINES TECHNIQUES
RECHERCHES (Int. Cl.4)

F 16 D

Le présent rapport de recherche a été établi pour toutes les revendications

| Lieu de la recherche | Date d'achèvement de la recherche | Examinateur |
|---|---|---|
| LA HAYE | 02-07-1986 | ORTHLIEB CH.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82